# EUROPÄISCHE PATENTANMELDUNG

(11) **EP 3 199 770 A1**
(43) Veröffentlichungstag der Anmeldung: **02.08.2017**
(21) Anmeldenummer: 17151992.9
(22) Anmeldetag: 18.01.2017
(51) Int. Cl.: F01L 3/20, F01L 3/14, F01L 3/04

(54) **METALLISCHES HOHLVENTIL FÜR EINE BRENNKRAFTMASCHINE EINES NUTZKRAFTFAHRZEUGS**

(30) Priorität: 20.01.2016 DE 102016200739
(71) Anmelder: Mahle International GmbH, 70376 Stuttgart (DE)
(72) Erfinder: KROOS, Peter, 71277 Rutesheim (DE); LUVEN, Christoph, 70376 Stuttgart (DE); PUCK, Alexander, 73734 Esslingen (DE); SCHACHERER, Roland, 78187 Geisingen (DE)
(74) Vertreter: BRP Renaud & Partner mbB Rechtsanwälte Patentanwälte Steuerberater

(57) **Zusammenfassung**

Die Erfindung betrifft ein metallisches Hohlventil (1) für eine Brennkraftmaschine eines Nutzfahrzeugs. Das metallische Hohlventil (1) umfasst einen rohrförmigen Ventilschaft (2), welcher in einen Ventilkopf (3) mit gegenüber dem Ventilschaft (2) vergrößerten Außendurchmesser übergeht, wobei der Ventilschaft (2) und der Ventilkopf (3) einen gemeinsamen Hohlraum (4) begrenzen. Der Ventilschaft (2) weist einen Außendurchmesser (d_{A}) von mehr als 7 mm und einen Innendurchmesser (d_{I}) von mindestens 4,5 mm auf.

## Beschreibung

Die Erfindung betrifft ein metallisches Hohlventil für eine Brennkraftmaschine eines Nutzfahrzeugs. Die Erfindung betrifft weiterhin eine Brennkraftmaschine eines Nutzfahrzeugs mit einem solchen metallischen Hohlventil. Die Erfindung betrifft schließlich ein Nutzfahrzeug mit einer solchen Brennkraftmaschine.

Steigende thermische Belastungen in Brennkraftmaschinen von Nutzfahrzeugen machen es in zunehmendem Maße erforderlich, deren zentrale Bestandteile wie etwa Ventile zum Öffnen und Schließen von Lufteinlässen sowie Abgasauslässen der Brennkraftmaschine zu kühlen. Aus dem PKW-Bereich ist es bekannt, besagte Ventile als sogenannte metallische Hohlventile auszulegen, die ein innenliegendes, flüssiges Kühlmedium aufweisen. Generell gilt für metallische Hohlventile, dass diese ein geringeres Eigengewicht sind als Vollventile und aufgrund besagter Befüllung mit einem Kühlmedium eine verbesserte Wärmeabfuhr erlauben.

Da die im Nutzfahrzeug-Bereich an besagte Ventile gestellten Anforderungen bezüglich Verschleißbeständigkeit und Lebensdauer deutlich höher sind als im PKW-Bereich und von herkömmlichen Hohlventilen bislang nicht erreicht werden konnte, kommen herkömmliche Hohlventile in Nutzfahrzeugen bislang nicht zum Einsatz.

Es ist daher eine Aufgabe der vorliegenden Erfindung, eine verbesserte Ausführungsform für ein metallisches Hohlventil zu schaffen, welches sich auch, insbesondere hinsichtlich Verschleißeigenschaften und Lebensdauer, für die Verwendung in Nutzfahrzeugen eignet.

Diese Aufgabe wird erfindungsgemäß durch den Gegenstand der unabhängigen Patentansprüche gelöst. Vorteilhafte Ausführungsformen sind Gegenstand der abhängigen Patentansprüche.

Ein erfindungsgemäßes metallisches Hohlventil für eine Brennkraftmaschine eines Nutzfahrzeugs umfasst einen rohrförmigen Ventilschaft, welcher in einen Ventilkopf mit gegenüber dem Ventilschaft vergrößerten Außendurchmesser übergeht. Mit "metallisch" ist vorliegend gemeint, dass das Material sowohl des Ventilschafts als auch des Ventilkopf ein Metall ist oder umfasst. Der Ventilschaft und der Ventilkopf weisen erfindungsgemäß einen gemeinsamen Hohlraum auf. Besagte Hohlraum kann mit einem Kühlmedium befüllt werden, um die Wärmeabfuhr aus dem Hallventil maßgeblich zu verbessern. Experimentelle Untersuchungen haben nun auf überraschende Weise gezeigt, dass auch ein metallisches Hohlventil die hinsichtlich Verschleißbeständigkeit und zu erwartende Lebensdauer in einem Nutzfahrzeug bestehenden Anforderungen zu erfüllen vermag, wenn der Ventilschaft einen Außendurchmesser von mehr als 7 mm und einen den Hohlraum begrenzenden Innendurchmesser von mindestens 4,5 mm aufweist. Die besagten, erfindungswesentlichen Abmessungen des Ventilschaft führen dazu, dass mittels des im Hohlraum befindlichen Kühlmediums Wärme aus dem Hohlventil besonders effektiv abgeführt und gleichmäßig verteilt werden kann.

Zur Erzielung einer besonders hohen Verschleißbeständigkeit und einer besonders hohen Lebensdauer kann der Ventilschaft besonders bevorzugt einen Außendurchmesser zwischen 8 mm und 11 mm aufweisen. Alternativ oder zusätzlich kann der Ventilschaft einen Innendurchmesser zwischen 5 mm und 7 mm aufweisen.

Bei einer vorteilhaften Weiterbildung weist der Ventilkopf einen vom Ventilschaft abgewandten Kopfboden auf, welcher eine Bodendicke zwischen 2 mm und 5 mm besitzt. Eine solche filigrane, also vergleichsweise dünnwandige Auslegung der Bodendicke führt zu einer besonders gleichmäßigen thermische Kopplung des Hohlventils an den Brennraum der Brennkraftmaschine, in welchem das Hohlventil als Teil eines Ventiltriebs zum Einsatz kommt. Insbesondere kann mittels dieser Maßnahme der Ausbildung von unerwünschten Rissen aufgrund ungleichmäßiger Aufheizung des Hohlventils im Bereich des Kopfbodens entgegengewirkt werden.

Um eine möglichst effiziente Kühlung des metallischen Hohlventils erreichen zu können, ist eine Wanddicke des Ventilschafts filigran, also vergleichsweise dünnwandig, ausgelegt. Bei dieser Variante beträgt die Wanddicke des Ventilschafts daher zwischen 1,5 mm und 5 mm.

Um die gewünschte, möglichst effiziente Kühlung des metallischen Hohlventils erreichen zu können, kann auch eine Wanddicke des Hohlventils im Bereich zwischen Ventilschaft und Ventilkopf, also im Bereich der sogenannten Ventilkehle filigran ausgelegt sein. Besonders bevorzugt beträgt besagte Wanddicke der Ventilkehle zwischen 1,5 mm und 5 mm.

Bei einer weiteren bevorzugten Ausführungsform ist der Ventilkopf mittels Schmiedens oder mittels elektrochemischen Abtragens hergestellt. Auf diese Weise kann eine hohe Verschleißbeständigkeit des besonders hohen thermischen Belastungen ausgesetzten Ventilkopfs erreicht werden.

Bei einer bevorzugten Ausführungsform ist der Hohlraum teilweise mit einem Fluid, vorzugsweise mit Natrium, befüllt. Dies erlaubt eine besonders effektive Abführung der vom Hohlventil im Bereich des Ventilkopfes aufgenommenen Wärme aus dem Brennraum der Brennkraftmaschine.

Die Erfindung betrifft weiterhin eine Brennkraftmaschine für ein Nutzfahrzeug mit wenigstens einem Zylinder, der einen Brennraum aufweist. Am Brennraum sind ein Lufteinlass und ein Abgasauslass vorgesehen. Die Brennkraftmaschine umfasst weiterhin einen Ventiltrieb, welcher zum Öffnen und Verschließen des Lufteinlasses und/oder des Abgasauslasses ein vorangehend vorgestelltes metallisches Hohlventil aufweist. Die voranstehend erläuterten Vorteile des metallischen Hohlventils übertragen sich daher auf die erfindungsgemäße Brennkraftmaschine.

Bei einer bevorzugten Ausführungsform der erfindungsgemäßen Brennkraftmaschine sind der Lufteinlass und/oder der Abgasauslass von einem Ventilsitz eingefasst, an welchem das Hohlventil in einer Schließstellung mit einem Kontaktabschnitt anliegt. In der Schließstellung verschließt das Hohlventil den Lufteinlass bzw. den Abgasauslass. Das Hohlventil ist zumindest im Bereich des Kontaktabschnitts gepanzert. Auch diese Maßnahme führt zu einer verbesserten Verschleißbeständigkeit des Hohlventils.

Bevorzugt kann die Panzerung des Kontaktabschnitts mittels Plasma-Pulver-Auftragsschweißen, besonders bevorzugt unter Verwendung von Eisen (Fe) oder Kobalt (Co) als Zusatzwerkstoff, hergestellt sein. Eine auf diese Weise hergestellte Panzerung besitzt eine besonders hohe Lebensdauer.

Die Erfindung betrifft weiterhin ein Nutzfahrzeug mit einer vorangehend vorgestellten Brennkraftmaschine. Vorangehend genannte Vorteile der erfindungsgemäßen Brennkraftmaschine übertragen sich daher auch auf das erfindungsgemäße Nutzfahrzeug.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Zeichnung dargestellt und werden in der nachfolgenden Beschreibung näher erläutert, wobei sich gleiche Bezugszeichen auf gleiche oder ähnliche oder funktional gleiche Komponenten beziehen.

Die einzige Figur zeigt ein Beispiel eines erfindungsgemäßen metallischen Hohlventils 1 in einem Längsschnitt entlang einer Mittellängsachse M des Ventilschafts 2 des Hohlventils. Durch die Mittellängsachse M ist eine axiale Richtung A definiert. Der Ventilschaft 2 geht entlang der axialen Richtung A in einen Ventilkopf 3 über, welcher einen gegenüber dem Ventilschaft 2 vergrößerten Außendurchmesser d_{A} besitzt. Der Ventilschaft 2 und der Ventilkopf 3 sind integral aneinander ausgeformt. Der Ventilkopf 3 kann mittels Schmiedens oder mittels elektrochemischen Abtragens hergestellt sein.

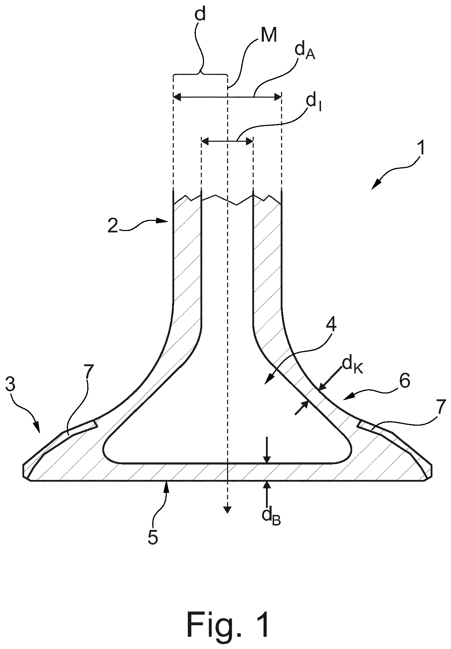

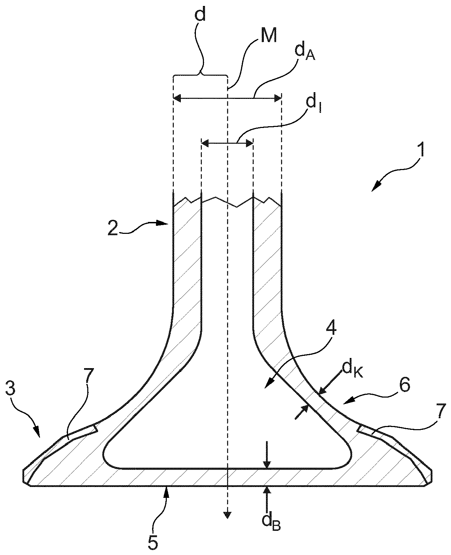

Wie Figur 1 erkennen lässt, weisen der Ventilschaft 2 und der Ventilkopf 3 - dem einschlägigen Fachmann auch als Ventilteller bekannt - einen gemeinsamen Hohlraum 4 auf. Dieser Hohlraum 4 ist teilweise mit einem Fluid, vorzugsweise mit Natrium, befüllt, was in Figur 1 der Übersichtlichkeit halber nicht dargestellt ist. Der Ventilschaft 2 weist einen Außendurchmesser d_{A} von mehr als 7 mm auf. Bevorzugt beträgt der Wert für den Außendurchmesser d_{A} zwischen 8 mm und 11 mm. Weiterhin weist der Ventilschaft einen Innendurchmesser d_{I} von mindestens 4,5 mm auf. Bevorzugt beträgt der Wert für den Innendurchmesser d_{I} zwischen 5 mm und 7 mm. Besonders bevorzugt weist der Ventilschaft eine Wanddicke d zwischen 1,5 mm und 5 mm auf. Dabei ist besagte Wanddicke d durch die Differenz zwischen dem Außendurchmesser d_{A} und dem Innendurchmesser d_{I} definiert.

Wie die Darstellung der Figur 1 weiter erkennen lässt, weist der Ventilkopf 3 einen vom Ventilschaft 2 abgewandten Kopfboden 5 auf, welcher eine Bodendicke d_{B} zwischen 2 mm und 5 mm besitzt. Weiterhin kann die Wanddicke d_{K} einer zwischen dem Ventilschaft 2 und dem Ventilkopf 3 ausgebildeten Ventilkehle 6 zwischen 1,5 mm und 5 mm betragen.

Das in Figur 1 dargestellte Hohlventil 1 kann als Teil eines Ventiltriebs in einer Brennkraftmaschine (in Figur 1 nicht gezeigt) eines Nutzfahrzeugs eingesetzt werden, um Lufteinlässe und/oder Abgasauslässe zu öffnen und zu verschließen. Besagter Lufteinlass bzw. Abgasauslass kann von einem Ventilsitz eingefasst sein, welchen das Hohlventil 1 in einer Schließstellung, in welcher es den Lufteinlass bzw. den Abgasauslass verschließt, mit einem Kontaktabschnitt 7 anliegt. Besagter Kontaktabschnitt 7, welcher in Figur 1 lediglich schematisch angedeutet ist, ist im Betrieb des Ventiltriebs in der Brennkraftmaschine besonderen mechanischen und thermischen Belastungen ausgesetzt. Daher kann das Hohlventil 1 zumindest im Bereich des Kontaktabschnitts 7 gepanzert ausgebildet sein. Eine solche Panzerung des Kontaktabschnitts 7 kann bevorzugt mittels Plasma-Pulver-Auftragsschweißen, besonders bevorzugt unter Verwendung von Eisen (Fe) oder Kobalt (Co) als Zusatzwerkstoff, hergestellt sein.

## Patentansprüche

1. Metallisches Hohlventil (1) für eine Brennkraftmaschine eines Nutzfahrzeugs,
- mit einem rohrförmigen Ventilschaft (2), welcher in einen Ventilkopf (3) mit einem gegenüber dem Ventilschaft (2) vergrößerten Außendurchmesser übergeht,
- wobei der Ventilschaft (2) und der Ventilkopf (3) einen Hohlraum (4) begrenzen,
**dadurch gekennzeichnet, dass**
- der Ventilschaft (2) einen Außendurchmesser (d_{A}) von mehr als 7 mm, vor-zugsweise zwischen 8 mm und 11 mm, aufweist,
- der Ventilschaft (2) einen Innendurchmesser (d_{I}) von mindestens 4,5 mm, vorzugsweise zwischen 5 mm und 7 mm, aufweist.

2. Metallisches Hohlventil nach Anspruch 1,
**dadurch gekennzeichnet, dass**
der Ventilkopf (3) einen vom Ventilschaft (2) abgewandten Kopfboden (5) aufweist, welcher eine Bodendicke (d_{B}) zwischen 2 mm und 5 mm besitzt.

3. Metallisches Hohlventil nach Anspruch 1 oder 2,
**dadurch gekennzeichnet, dass**
eine Wanddicke (d) des Ventilschafts (2) zwischen 1,5 mm und 5 mm aufweist.

4. Metallisches Hohlventil nach einem der Ansprüche 1 bis 3,
**dadurch gekennzeichnet, dass**
die Wanddicke (d_{K}) einer zwischen Ventilschaft (2) und Ventilkopf (3) angeordneten Ventilkehle (6) zwischen 1,5 mm und 5 mm beträgt.

5. Metallisches Hohlventil nach einem der vorhergehenden Ansprüche,
**dadurch gekennzeichnet, dass**
der Ventilkopf mittels Schmiedens oder mittels elektrochemischen Abtragens (ECM) hergestellt ist.

6. Metallisches Hohlventil nach einem der vorhergehenden Ansprüche,
**dadurch gekennzeichnet, dass**
der Hohlraum (4) teilweise mit einem Fluid, vorzugsweise mit Natrium, befüllt ist.

7. Brennkraftmaschine für ein Nutzfahrzeug,
- mit wenigstens einem einen Brennraum aufweisenden Zylinder,
wobei am Brennraum ein Lufteinlass und ein Abgasauslass vorgesehen sind,
- mit einem Ventiltrieb, welcher zum Öffnen und Verschließen des Lufteinlasses und/oder des Abgasauslasses ein metallisches Hohlventil (1) nach einem der vorhergehenden Ansprüche aufweist.

8. Brennkraftmaschine nach Anspruch 7,
**dadurch gekennzeichnet, dass**
der Lufteinlass und/oder der Abgasauslass von einem Ventilsitz eingefasst sind, an welchem das metallische Hohlventil (1) in einer Schließstellung, in welcher es den Lufteinlass oder den Abgasauslass verschließt, mit einem Kontaktabschnitt (7) anliegt,
wobei das metallische Hohlventil (1) zumindest im Bereich des Kontaktabschnitts (7) gepanzert ist.

9. Brennkraftmaschine nach Anspruch 8,
**dadurch gekennzeichnet, dass**
die Panzerung des Kontaktabschnitts (7) mittels Plasma-Pulver-Auftragsschweißen unter Verwendung von Eisen (Fe) oder Kobalt (Co) als Zusatzwerkstoff hergestellt ist.

10. Nutzfahrzeug mit einer Brennkraftmaschine nach Anspruch 8 oder 9.
